# EUROPÄISCHE PATENTANMELDUNG

(11) **EP 1 407 807 A1**
(43) Veröffentlichungstag der Anmeldung: **14.04.2004**
(21) Anmeldenummer: 03010451.7
(22) Anmeldetag: 09.05.2003
(51) Int. Cl.: B01D 46/16, B03C 3/15, B04C 1/00, F01M 13/04

(54) **Vorrichtung zur Abscheidung von Flüssigkeit aus einem Gasstrom mittels Fliehkräfte**

(30) Priorität: 09.10.2002 DE 10247123
(71) Anmelder: ROBERT BOSCH GMBH, 70442 Stuttgart (DE)
(72) Erfinder: Uhlenbrock, Dietmar, 49545 Tecklenburg (DE); Altvater, Bernd, 71566 Althuette-Waldenweiler (DE)

(57) **Zusammenfassung**

Bei bekannten Vorrichtungen zur Abscheidung von Flüssigkeiten mit einem Zyklon ist bekannt, daß die Abscheidewirkung erheblich abfällt, sobald der Gas-Volumenstrom der Kurbelgehäuseentlüftung nicht konstant ist und zeitlich schwankt. Dies ist sehr nachteilig, da eine hohe und zeitlich konstante Abscheidewirkung benötigt wird, um einen hohen Ölverlust zu vermeiden.

Bei der erfindungsgemäßen Vorrichtung ist die Abscheidewirkung dagegen unabhängig von zeitlich schwankenden Gas-Volumenströmen, so daß bei allen Betriebszuständen der Brennkraftmaschine eine zuverlässige Abscheidung der Öltropfen gewährleistet ist.
Erfindungsgemäß wird vorgeschlagen, daß wenigstens zwei als spiralförmige Strömungskanäle ausgebildete Spiralen (5) oder wenigstens zwei als schraubenförmige Strömungskanäle ausgebildete Wendeln (37) in der Vorrichtung parallel geschaltet werden.

## Beschreibung

### Stand der Technik

Die Erfindung geht aus von einer Vorrichtung zur Abscheidung von Flüssigkeit aus einem Gasstrom nach der Gattung des Hauptanspruchs.

Es ist schon eine Vorrichtung zur Abscheidung von Flüssigkeit, insbesondere Öl, aus der DE 199 12 271 A1 bekannt, in der mehrere parallel geschaltete Zyklone vorgesehen sind. Einzeln oder parallel geschaltete Zyklone haben jedoch bei Betriebszuständen einer Brennkraftmaschine, in denen ein zu reinigender Blow-By-Gas-Volumenstrom einer Kurbelgehäuseentlüftung zeitlich vergleichsweise stark schwankt, eine schlechte Abscheidewirkung. In dem Blow-By-Gas der Kurbelgehäuseentlüftung enthaltenes Öl muß jedoch zur Vermeidung eines hohen Ölverlustes zuverlässig abgeschieden werden, da das Blow-By-Gas einem Ansaugstrom in einem Ansaugrohr der Brennkraftmaschine zugemischt wird und in dem Blow-By-Gas enthaltenes Öl damit in der Brennkraftmaschine verbrannt würde. Darüber hinaus kann in dem Blow-By-Gas enthaltenes Öl auch Bauteile der Brennkraftmaschine, wie z.B. Heißfilmanemometer, Turbolader, Ladeluftkühler und Lambdasonde, schädigen.

Aus der DE 197 00 733 A1 ist bekannt, daß Vliese, Drahtgestricke, Drahtwolle, Garne oder Granulate zur Abscheidung von Flüssigkeit, insbesondere Öl, in einem Feinabscheider eingesetzt werden können. Hierbei besteht jedoch die Gefahr, daß sich diese Materialien im Laufe der Zeit zusetzen und im schlimmsten Fall sogar verstopfen. Auch die Gefahr der Verstopfung durch Vereisung ist gegeben.
Speziell Vliese und Garne sind teure Materialien, können aber kleine Partikel unter einem Mikrometer herausfiltern.

Aus der nicht vorveröffentlichten deutschen Patentanmeldung 101 27 819 ist bereits eine Vorrichtung zur Abscheidung von Flüssigkeit, insbesondere Öl, vorgeschlagen worden. Durch eine Aufspaltung der Vorrichtung in einen Vorabscheider, einen Grobabscheider und einen Feinabscheider wird vergleichsweise viel Bauraum benötigt.

### Vorteile der Erfindung

Die erfindungsgemäße Vorrichtung zur Abscheidung von Flüssigkeit aus einem Gasstrom mit den kennzeichnenden Merkmalen des Hauptanspruchs hat demgegenüber den Vorteil, daß auf einfache Art und Weise eine Verbesserung der Abscheidewirkung erzielt wird, indem in der Vorrichtung spiralförmige oder wendelförmige Strömungskanäle parallel geschaltet sind. Die Abscheidewirkung der spiralförmigen Strömungskanäle, im Folgenden als Spiralen bezeichnet, und die der wendelförmigen Strömungskanäle, im Folgenden als Wendeln bezeichnet, ist im Gegensatz zu der Abscheidewirkung der Zyklone nicht abhängig von einem zeitlich schwankenden Volumenstrom des Blow-By-Gases, so daß die parallel geschalteten Spiralen oder Wendeln Flüssigkeit wesentlich besser und zuverlässiger abscheiden können als die parallel geschalteten Zyklone. Durch eine entsprechende Auslegung der Spiralen oder Wendeln ist es möglich, Partikel kleiner als einen Mikrometer abzuscheiden, so daß die Vorrichtung auch im Feinbereich einsetzbar ist und die teuren Vliese und Garne ersetzen kann. Ein Vorabscheider kann entfallen, da die erfindungsgemäße Vorrichtung auch Partikel größer als ein Mikrometer abscheiden kann. Auf diese Weise kann die Vorrichtung bezüglich des Bauraums kleiner gebaut werden. Die Gefahr des Verstopfens besteht nicht.

Durch die in den Unteransprüchen aufgeführten Maßnahmen sind vorteilhafte Weiterbildungen und Verbesserungen der im Hauptanspruch angegebenen Vorrichtung möglich.

Es ist vorteilhaft, entlang der Strömungskanäle der Spiralen seitlich außen jeweils mehrere zylindrische Ausbuchtungen vorzusehen, die über jeweils eine Öffnung mit dem Strömungskanal verbunden sind. Auf diese Weise wird eine sehr gute Abscheidewirkung erzielt.

Außerdem vorteilhaft ist es, einen Strömungsquerschnitt jeder Spirale oder Wendel in radialer Richtung schmal und/oder senkrecht zur radialen Richtung hoch auszubilden, da auch auf diese Weise eine sehr gute Abscheidewirkung erzielt werden kann. Die Tropfen, die mit dem zu reinigenden Blow-By-Gas-Volumenstrom in eine der Spiralen oder Wendeln gelangen, können aufgrund ihrer Trägheit nicht der spiralförmig oder wendelförmig verlaufenden Strömung folgen, bewegen sich aufgrund ihrer Massenträgheit in gleicher Richtung weiter und prallen dabei gegen eine Wand der Spiralen oder Wendeln, wo sie haften bleiben und sich mit anderen Tropfen zu größeren Tropfen oder einem Flüssigkeitsfilm vereinen und damit aus dem Volumenstrom ausgeschieden sind. Wichtig für eine gute Abscheidewirkung ist dabei, daß der Weg für die Tropfen zu der Wand des Strömungskanals sehr kurz ist. Daher ist ein in radialer Richtung schmaler Strömungskanal notwendig. Um trotzdem einen großen Strömungsquerschnitt und damit einen geringen Druckverlust zu haben, muß der Strömungsquerschnitt senkrecht zur radialen Richtung hoch ausgebildet werden.

Vorteilhaft ist es, den Strömungsquerschnitt der Strömungskanäle in Strömungsrichtung abschnittsweise zu verengen, insbesondere am Anfang der Strömungskanäle, um die Strömung zu beschleunigen und dadurch die Massenträgheitskräfte zu erhöhen, so daß auch sehr kleine Tropfen abgeschieden werden.

Vorteilhaft ist es auch, den Strömungsquerschnitt der Strömungskanäle in Strömungsrichtung abschnittsweise aufzuweiten, insbesondere am Ende der Strömungskanäle, um die Strömung zu verlangsamen und dadurch große Tropfen abzuscheiden, die bereits einmal abgeschieden wurden, aber wegen hoher Strömungsgeschwindigkeit wieder mitgerissen wurden. Durch die Aufweitung der Strömungskanäle wird außerdem der Druckverlust verringert.

Auch vorteilhaft ist es, die Spiralen oder Wendeln in Reihen nebeneinander anzuordnen, da auf diese Weise eine äußerst kompakte Anordnung der Spiralen oder Wendeln in dem Gehäuse erreicht wird.

Vorteilhaft ist es auch, die Spiralen ineinander und die Wendeln ineinander oder übereinander anzuordnen, da auf diese Weise auch eine kompakte Anordnung der Spiralen oder Wendeln erzielt wird.

Auch eine Kombination der zuvor genannten Anordnungsmöglichkeiten, also nebeneinander, ineinander oder übereinander, ist aus den zuvor genannten Gründen vorteilhaft.

Darüber hinaus vorteilhaft ist es, in den Strömungskanälen Filterelemente, beispielsweise Vliese, Garne oder Drahtgestricke, vorzusehen. Auf diese Weise wird die Abscheidewirkung weiter verbessert.

Desweiteren vorteilhaft ist, die parallel geschalteten Spiralen mit einer Bodenwand und einer Deckenwand zu versehen, damit die Spiralen jeweils einen geschlossenen Strömungskanal aufweisen. Über jeweils eine Gasaustrittsöffnung wird der auf die Spiralen aufgeteilte Blow-By-Gas-Volumenstrom stromab der Deckenwand wieder zusammengeführt. Auch die abgeschiedene Flüssigkeit wird über je eine Rücklauföffnung gesammelt. Die gesammelte Flüssigkeit wird über einen gemeinsamen Flüssigkeitsauslaß wieder in das Kurbelgehäuse zurückgeleitet.

### Zeichnung

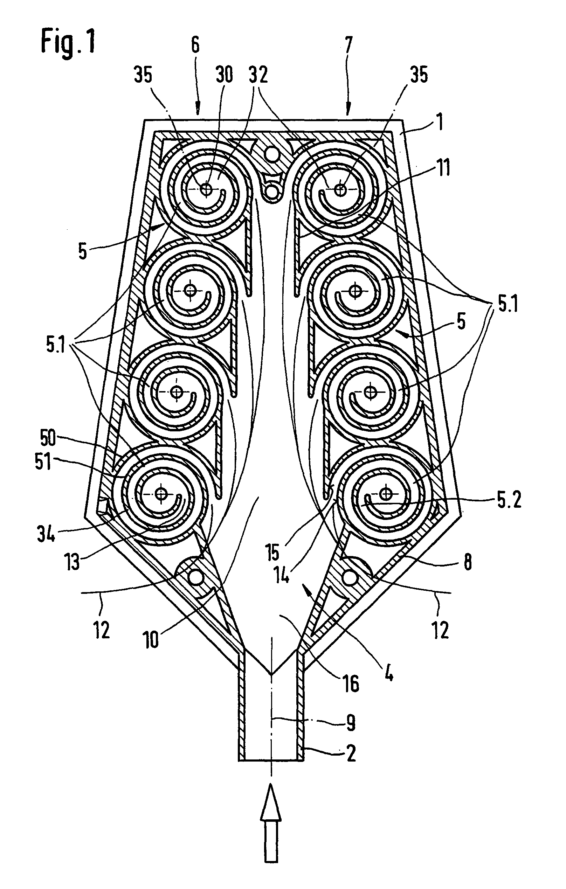

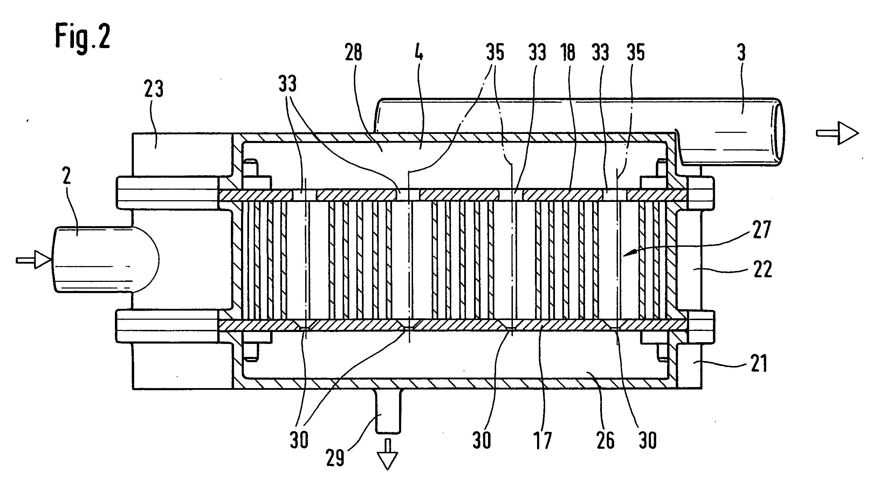

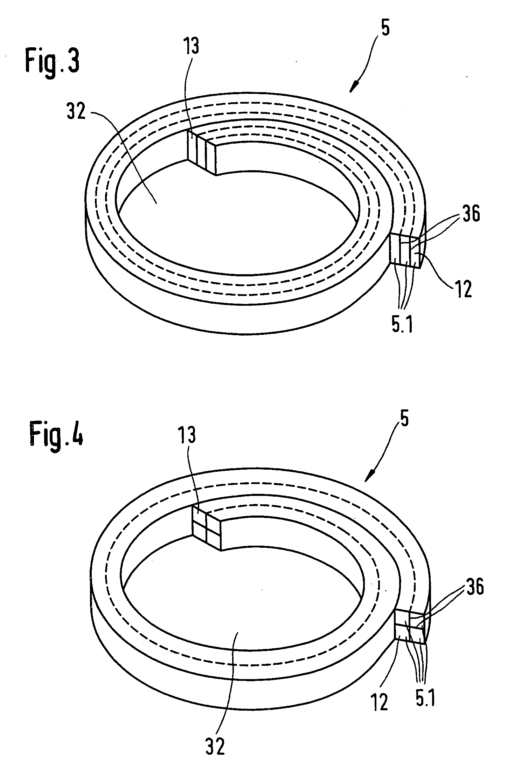

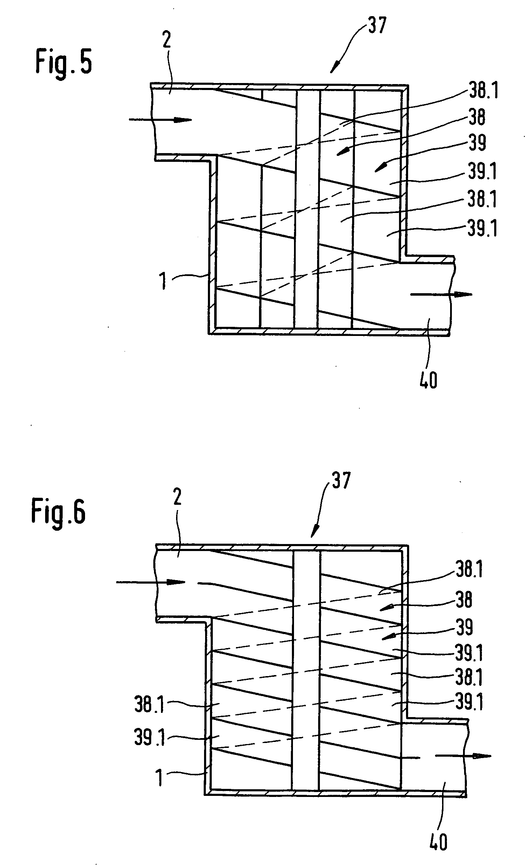

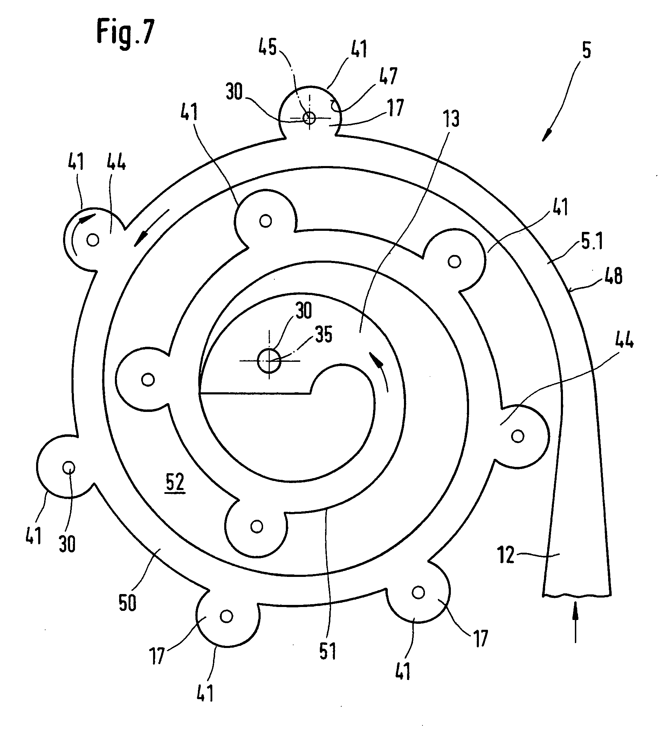

Ausführungsbeispiele der Erfindung sind in der Zeichnung vereinfacht dargestellt und in der nachfolgenden Beschreibung näher erläutert. Es zeigen Fig.1 im Längsschnitt eine Ansicht der Vorrichtung zur Abscheidung von Flüssigkeit aus einem Gasstrom, Fig.2 eine Seitenansicht der Vorrichtung gemäß Fig.1 im Teilschnitt, Fig.3 eine Ansicht von drei in- und übereinanderliegend angeordneten Spiralen, Fig.4 eine Ansicht von vier ineinanderliegend angeordneten Spiralen, Fig. 5 eine Ansicht von zwei ineinanderliegend angeordneten Wendeln, Fig.6 eine Ansicht von zwei übereinanderliegend angeordneten Wendeln und Fig.7 eine Ansicht von einer Spirale mit seitlich angeordneten zylindrischen Ausbuchtungen.

### Beschreibung der Ausführungsbeispiele

Fig.1 zeigt eine erfindungsgemäße Vorrichtung zur Abscheidung von Flüssigkeit aus einem Gasstrom. Die erfindungsgemäße Vorrichtung dient vorzugsweise zum Abscheiden von Flüssigkeiten, insbesondere Öl, aus einem Gasstrom, kann also allgemein zum Abscheiden von Tropfen von Flüssigkeiten aus strömenden Gasen verwendet werden. Die erfindungsgemäße Vorrichtung wird vorzugsweise eingesetzt in einer Kurbelgehäuseentlüftung einer Brennkraftmaschine.

Während eines Betriebs einer Brennkraftmaschine strömt aufgrund einer kleinen Leckage zwischen einem Kolben, Kolbenringen und Zylinderlaufflächen ein Gas aus einem Verbrennungsraum in ein Kurbelgehäuse. Dieses Gas wird als Durchblasegas oder als Blow-by-Gas bezeichnet. Im Folgenden wird für das Blow-By-Gas nur noch allgemein der Begriff Gas verwendet. Durch die kleine Leckage von Gas aus dem Verbrennungsraum der Brennkraftmaschine kommt es zu einer unzulässigen Druckerhöhung in dem Kurbelgehäuse, so daß es notwendig ist, einen Druckausgleich durch die sogenannte Kurbelgehäuseentlüftung zu erreichen. Da das Gas eine hohe Kohlenwasserstoff-Konzentration aufweist, ist es nicht möglich, das Gas in die Atmosphäre abzugeben.
Die Kurbelgehäuseentlüftung leitet das Gas daher als Gasstrom in einen Ansaugtrakt der Brennkraftmaschine, damit es dort einer Verbrennung zugeführt wird. In dem Kurbelgehäuse entsteht durch das mit hoher Strömungsgeschwindigkeit einströmende Gas und durch die bewegten Teile in dem Kurbelgehäuse ein Ölnebel mit vielen kleinen und großen Öltropfen. Diese Öltropfen müssen bei der Kurbelgehäuseentlüftung mit Hilfe einer Vorrichtung zur Abscheidung von Flüssigkeit aus dem Gasstrom abgeschieden werden, um einen hohen Ölverlust zu vermeiden und um die Verbrennung nicht negativ zu beeinflussen.

Die Vorrichtung zur Abscheidung von Flüssigkeit aus dem Gasstrom hat ein Gehäuse 1 mit wenigstens einem zumindest mittelbar mit dem Kurbelgehäuse verbundenen Eingangskanal 2, wenigstens einem zumindest mittelbar mit dem Ansaugrohr einer Brennkraftmaschine verbundenen Gasauslaß 3 (Figur 2) und einem Flüssigkeitsauslaß 29 (Figur 2). Der Eingangskanal 2 und der Gasauslaß 3 stehen in Verbindung mit einem Innenraum 4 des Gehäuses 1. In dem Innenraum 4 sind wenigstens zwei parallel geschaltete Spiralen 5 mit spiralförmig.ausgebildeten Strömungskanälen 5.1 angeordnet, so daß eine äußerst kompakte und platzsparende Anordnung der Strömungskanäle 5.1 in dem Gehäuse 1 erzielt wird. Die Spiralen 5 sind in wenigstens einer Reihe, beispielsweise in einer ersten Reihe 6 und einer zweiten Reihe 7 angeordnet. Die Spiralen 5 einer Reihe 6,7 berühren sich gegenseitig an einem Außendurchmesser in tangentialer Weise. Die Spiralen 5 werden gebildet durch jeweils eine Spiralwand 34, die spiralförmig derart auf einem imaginären Zylinder aufgerollt erscheint, daß sich einzelne Windungen der Spiralwand 34, beispielsweise die Windungen 50, 51, nicht berühren. Auf diese Weise entsteht zwischen den einzelnen Windungen, beispielsweise 50, 51, der Spiralwand 34 der spiralförmige Strömungskanal 5.1. Unter einer Spirale 5 wird also ein spiralförmiger Strömungskanal 5.1 mit Spiralwand 34 verstanden, wobei sich die Spiralwand 34 in einer Ebene (zweidimensional) spiralförmig radial nach außen gerichtet um eine Spiralachse 35 windet.

Abschnittsweise, vorzugsweise radial außen in einem Lufteinlaß 12 der Spiralen 5, verjüngt sich der spiralförmige Strömungskanal 5.1 in Strömungsrichtung (siehe Figur 7), um die Strömung zu beschleunigen und die auf die Flüssigkeitstropfen wirkenden Massenträgheitskräfte zu erhöhen. Auf diese Weise werden auch besonders kleine Tropfen an den Spiralwänden 34 abgeschieden.

In einem weiteren Abschnitt der spiralförmigen Strömungskanäle 5.1, vorzugsweise radial innen in einem Ausgangsbereich 5.2 der Spiralen 5, weitet sich der spiralförmige Strömungskanal 5.1 in Strömungsrichtung (siehe Figur 7) auf, um die Strömung zu verlangsamen. Auf diese Weise werden große Tropfen, die bereits abgeschieden waren und wegen hoher Strömungsgeschwindigkeit wieder mitgerissen wurden, aufgrund ihrer Trägheit abgeschieden.

Die Reihen 6,7 sind beispielsweise an einer Innenwand 8 des Innenraums 4 in Richtung einer Achse 9 angeordnet. Entlang der Achse 9 bleibt zwischen der ersten Reihe 6 und der zweiten Reihe 7 ein Raum frei, der einen Hauptkanal 10 bildet. Über den Hauptkanal 10 wird der Gas-Volumenstrom der Kurbelgehäuseentlüftung gleichmäßig auf die Spiralen 5 verteilt.

Die sich entlang der Achse 9 gegenüberliegenden Spiralen 5 haben eine entgegengesetzte Windungsrichtung. Beispielsweise sind die Spiralen 5 der Reihe 6 linksdrehend und die Spiralen 5 der Reihe 7 rechtsdrehend. Die Spiralen 5 haben auf der dem Hauptkanal 10 zugewandten Seite jeweils den Lufteinlaß 12 und jeweils zentral in ihrem Inneren einen Luftauslaß 13. Um eine gleichmäßige Verteilung des Gas-Volumenstroms der Kurbelgehäuseentlüftung zu erreichen, verengt sich der Hauptkanal 10 in Strömungsrichtung gesehen, beispielsweise stufenförmig. Auf der dem Hauptkanal 10 zugewandten Seite der Spiralen 5 ist jeweils zwischen zwei Spiralen 5 eine Hauptkanalwand 11 angeordnet, die entgegen der Strömungsrichtung gesehen eine Innenseite 14 des Lufteinlasses 12 der Spirale 5 mit der Außenseite 15 des Lufteinlasses 12 der nächsten Spirale 5 der jeweiligen Reihe 6,7 verbindet. Auf diese Weise wird die Kanalform des Hauptkanals 10 ausgebildet. Der Eingangskanal 2 ist im Gehäuse 1 mit einem Diffusorkanal 16 verbunden, in dem sich der Querschnitt nach stromabwärts aufweitet und der in den Hauptkanal 10 mündet. Der Eingangskanal 2, der Diffusorkanal 16 und der Hauptkanal 10 liegen beispielsweise auf der Achse 9.
Bei dem Ausführungsbeispiel nach Fig.1 hat jeder der Reihen 6 und 7 jeweils vier Spiralen 5. Es können jedoch je nach Bedarf auch andere oder unterschiedliche Stückzahlen von Spiralen 5 in den Reihen 6 und 7 vorgesehen sein. Das Gehäuse 1 ist bei dem Ausführungsbeispiel nach Fig.1 im Bereich der Spiralen 5 trapezförmig und im Bereich des Diffusorkanals 16 dreieckförmig.

Fig. 2 zeigt eine Seitenansicht der Vorrichtung nach Fig.1 im Teilschnitt. Die Spiralen 5 sind auf beiden Stirnseiten mit einer Wand abgedeckt, einer Bodenwand 17 und einer über dieser liegenden Deckenwand 18. Auf diese Weise entstehen geschlossene spiralförmige Strömungskanäle 5.1, die an einem Anfang der Spirale 5 jeweils einen Lufteinlaß 12 und an einem Ende der Spirale 5 jeweils einen Luftauslaß 13 haben. Das Gehäuse 1 weist ein unten liegendes Bodenteil 21, ein sich daran anschließendes Mittelteil 22 und ein darüber liegendes Deckelteil 23 auf. An dem Deckelteil 23 ist der Gasauslaß 3, an dem Mittelteil 22 der Eingangskanal 2 und an dem Bodenteil 21 ein Flüssigkeitsauslaß 29 vorgesehen. Die drei Gehäuseteile 21, 22, 23 des Gehäuses 1 sind flanschartig, beispielsweise durch Kleben, Verschweißen oder Verschrauben, kraft- oder formschlüssig miteinander verbunden. Die Deckenwand 18 ist zwischen dem Mittelteil 22 und dem Deckelteil 23 angeordnet, die Bodenwand 17 zwischen dem Bodenteil 21 und dem Mittelteil 22. Die Bodenwand 17 und die Deckenwand 18 teilen den Innenraum 4 des Gehäuses 1 in drei Räume, einen unten liegenden Ölsammelraum 26, einen darüber liegenden Filterraum 27 und einen oben liegenden Gasaustrittraum 28. Diese drei Räume 26, 27, 28 sind durch die Bodenwand 17 und die Deckenwand 18 voneinander getrennt. Der Querschnitt des Eingangskanals 2, des Gasauslasses 3 und des Flüssigkeits-auslasses 29 ist beispielsweise rund. Er kann aber auch rechteckig, vieleckig oder oval ausgebildet sein. Der Querschnitt des Diffusorkanals 16, des Hauptkanals 10, der spiralförmigen Strömungskanäle 5, des Ölsammelraums 26 und des Gasaustrittsraums 28 ist beispielsweise rechteckig. Der Querschnitt kann aber auch rund, oval oder vieleckig sein.

Das Gas der Kurbelgehäuseentlüftung strömt über den Eingangskanal 2 und den Diffusorkanal 16 in den Hauptkanal 10 des Filterraums 27. Von dort teilt sich der Gas-Volumenstrom auf die einzelnen Spiralen 5 auf. Das in dem Gas der Kurbelgehäuseentlüftung enthaltene Öl wird an den Spiralwänden 34 der Spiralen 5 abgeschieden, läuft aufgrund der Schwerkraft an den Spiralwänden 34 hinab bis auf die Bodenwand 17. Das innerhalb der Spiralen 5 abgeschiedene und auf die Bodenwand 17 hinabgelaufene Öl läuft dann, angetrieben durch die Gasströmung, auf der Bodenwand 17 durch die spiralförmigen Strömungskanäle 5.1 der Spiralen 5 bis in ein Zentrum 32 der Spiralen 5. Damit das in den Spiralen 5 abgeschiedene Öl in den Ölsammelraum 26 im Bodenteil 21 ablaufen kann, ist in der Bodenwand 17 jeweils nahe dem Zentrum 32 einer Spirale 5 eine Rücklauföffnung 30 angeordnet. In dem Bodenteil 21 wird das von den einzelnen Spiralen 5 abgeschiedene Öl gesammelt und über den Flüssigkeitsauslaß 29 in das nicht dargestellte Kurbelgehäuse zurückgeführt.

Die Öltropfen, die mit dem zu reinigenden Gas-Volumenstrom in eine der Spiralen 5 gelangen, können aufgrund ihrer Trägheit nicht der spiralförmig verlaufenden Strömung in der Spirale 5 folgen. Die Öltropfen bewegen sich aufgrund ihrer Trägheit in gleicher Richtung weiter, prallen dabei gegen eine Spiralwand 34 der Spirale 5 und werden damit abgeschieden. Wichtig für eine gute Abscheidewirkung ist dabei, daß der Weg für die Öltropfen zu der Spiralwand 34 des spiralförmigen Strömungskanals 5.1 sehr kurz ist. Daher ist ein schmaler Strömungskanal 5.1 notwendig. Um trotzdem einen großen Strömungsquerschnitt und damit einen geringen Druckverlust zu haben, muß der Strömungsquerschnitt und damit die Spirale 5 vergleichsweise hoch ausgebildet werden.

In der Deckenwand 18 ist jeweils nahe dem Zentrum 32 einer Spirale 5 eine Gasaustrittsöffnung 33 vorgesehen, durch die der Filterraum 27 mit dem Gasaustrittsraum 28 im Deckelteil 23 verbunden ist und durch die das gereinigte Gas aus den einzelnen Spiralen 5 in den Gasaustrittsraum 28 strömen kann. Von dort aus gelangt das gereinigte Gas zumindest mittelbar in ein nicht dargestelltes Ansaugrohr der Brennkraftmaschine. Die Gasaustrittsöffnung 33 und die Rücklauföffnung 30 einer Spirale 5 liegen jeweils auf einer Spiralachse 35.

Die Gasströmung in den Spiralen 5 ist im Gegensatz zu der Gasströmung in Zyklonen durch die Spiralwände 34 zwangsgeführt. Die Gasströmung in den Spiralen 5 bewegt sich auf einer zweidimensionalen Spirale. Das Gas durchströmt die Spiralen 5 von außen nach innen, da auf diese Weise zunächst große Flüssigkeitströpfen und mit zunehmender Umlenkung der Strömung immer kleinere Tropfen von Flüssigkeit abgeschieden werden können.

In den Spiralen 5 können Filterelemente vorgesehen sein, wie beispielsweise Vliese, Garne oder Drahtgestricke. Diese erhöhen die Abscheidewirkung der Spiralen 5.

Das Gehäuse 1, die Spiralen 5, die Bodenwand 17 und die Deckenwand 18 sind beispielsweise aus Kunststoff hergestellt.

Die Spiralen 5 müssen nicht parallel geschaltet nebeneinander, sondern können auch parallel geschaltet ineinander angeordnet sein. Es ist auch möglich, beide Möglichkeiten zu kombinieren und beispielsweise mehrere Spiralen 5, die aus mehreren ineinander angeordneten Spiralen bestehen, nebeneinander anzuordnen.

Bei der Vorrichtung nach Fig.3 sind die gegenüber der Vorrichtung nach Fig.1 und Fig.2 gleichbleibenden oder gleichwirkenden Teile durch die gleichen Bezugszeichen gekennzeichnet.
Fig.3 zeigt eine ungerade Anzahl, beispielsweise drei, von ineinander angeordneten Spiralen 5, wie sie beispielsweise in dem Gehäuse 1 anstatt der nebeneinander angeordneten Spiralen 5 vorgesehen sein können. Die ineinander angeordneten und parallel geschalteten Spiralen 5 in Fig.3 unterscheiden sich von den Spiralen 5 in Fig.1 dadurch, daß mehrere voneinander durch Trennwandungen 36 getrennte spiralförmige Strömungskanäle 5.1 nebeneinander und aneinander angrenzend angeordnet sind und in der gleichen Richtung verlaufen.

Bei der Vorrichtung nach Fig.4 sind die gegenüber den Vorrichtungen nach den Fig.1 bis Fig.3 gleichbleibenden oder gleichwirkenden Teile durch die gleichen Bezugszeichen gekennzeichnet.
Fig.4 zeigt eine gerade Anzahl, beispielsweise vier, von ineinander angeordneten und parallel geschalteten Spiralen 5, wie sie beispielsweise in dem Gehäuse 1 anstatt der nebeneinander angeordneten Spiralen 5 vorgesehen sein können. Die ineinander angeordneten Spiralen 5 in Fig.4 unterscheiden sich von den Spiralen 5 in Fig.1 dadurch, daß mehrere voneinander durch Trennwandungen 36 getrennte spiralförmige Strömungskanäle 5.1 nebeneinander, übereinander und aneinander angrenzend angeordnet sind und in der gleichen Richtung verlaufen.

Bei der Vorrichtung nach Fig.5 sind die gegenüber den Vorrichtungen nach den Fig.1 bis Fig.4 gleichbleibenden oder gleichwirkenden Teile durch die gleichen Bezugszeichen gekennzeichnet.
Anstatt der parallel geschalteten Spiralen 5 gemäß dem Ausführungsbeispiel nach Fig.1 können in dem Gehäuse 1 auch mehrere parallel geschaltete Wendeln 37 mit wendelförmig oder schraubenförmig verlaufenden Strömungskanälen 38 oder 39 vorgesehen sein, die als Einzelwendeln oder Mehrfachwendeln beispielsweise nebeneinander, ineinander oder übereinander in dem Gehäuse 1 angeordnet sind. Unter einer Wendel 37 wird ein schraubenförmig oder wendelförmig mit einer Steigung in axialer Richtung verlaufender Strömungskanal 38 oder 39 verstanden, dessen Wendelgänge 38.1, 39.1 einen konstanten Außenradius haben.

Wendeln bzw. einen Wendeleinsatz sind beispielsweise in der DE 197 00 733 A1 oder in der nicht vorveröffentlichten deutschen Patentanmeldung 101 27 819 gezeigt und beschrieben, wobei die Inhalte beider Schriften ausdrücklich Teil der Offenbarung sein sollen.

Fig.5 zeigt als Mehrfachwendeln ineinander angeordnete Wendeln 37 mit beispielsweise zwei wendelförmigen Strömungskanälen 38,39, wobei der eine Strömungskanal 38 radial innen und der andere Strömungskanal 39 radial außen vorgesehen ist. Der in den Eingangskanal 2 eintretende Gasstrom verteilt sich auf die beispielsweise zwei Strömungskanäle 38, 39 und wird in einem Ausgangskanal 40 wieder zusammengeführt. In den Strömungskanälen 38,39 an vertikalen Wendelwänden abgeschiedenes Öl läuft entlang der wendelförmigen Wendelwände den wendelförmigen Strömungskanal 38,39 hinab und wird in dem Ausgangskanal 40 abgeleitet. Die Gasströmung kann jedoch auch in umgekehrter Richtung erfolgen, so daß unten anstelle des Ausgangskanals der Eingangskanal 2 liegt und oben anstelle des Eingangskanals der Ausgangskanal 40.
Mehrere derartige Wendeln nach Fig.5 können beispielsweise in dem Gehäuse 1 aus Fig.1 vorgesehen und beispielsweise in den Reihen 6 und 7 nebeneinander angeordnet sein.

Bei der Vorrichtung nach Fig.6 sind die gegenüber den Vorrichtungen nach den Fig.1 bis Fig.5 gleichbleibenden oder gleichwirkenden Teile durch die gleichen Bezugszeichen gekennzeichnet.
Fig.6 zeigt übereinander angeordnete und parallel geschaltete Wendeln 37 mit beispielsweise zwei wendelförmigen Strömungskanälen 38,39. Jeder wendelförmige Strömungskanal 38, 39 bestehen aus wenigstens zwei Wendelgängen 38.1, 39.1. Die Wendelgänge 38.1 und 39.1 sind in axialer Richtung in abwechselnder Reihenfolge angeordnet. Der in dem Eingangskanal 2 eintretende Gasstrom verteilt sich auf die beispielsweise zwei Strömungskanäle 38, 39 und wird in dem Ausgangskanal 40 wieder zusammengeführt. In den Strömungskanälen 38,39 abgeschiedenes Öl läuft dem wendelförmigen Strömungskanal 38,39 folgend hinab und wird in dem Ausgangskanal 40 abgeleitet. Die Gasströmung kann jedoch auch in umgekehrter Richtung erfolgen, so daß unten anstelle des Ausgangskanals der Eingangskanal 2 liegt und oben anstelle des Eingangskanals der Ausgangskanal 40.

Derartige Wendeln nach Fig.6 können beispielsweise in dem Gehäuse 1 aus Fig.1 vorgesehen und beispielsweise in den Reihen 6 und 7 nebeneinander angeordnet sein.

Bei der Vorrichtung nach Fig.7 sind die gegenüber den Vorrichtungen nach den Fig.1 bis Fig.6 gleichbleibenden oder gleichwirkenden Teile durch die gleichen Bezugszeichen gekennzeichnet.
Die Vorrichtung nach Fig.7 unterscheidet sich von der Vorrichtung in Fig.1 und Fig.2 unter anderem darin, daß die Spirale 5 mehrere entlang des spiralförmigen Strömungskanals 5.1 seitlich radial außen angeordnete zylindrische Ausbuchtungen 41 aufweist.
Fig.7 zeigt eine Spirale 5 mit mehreren Ausbuchtungen 41. Die Ausbuchtungen 41 sind jeweils über eine Öffnung 44 unmittelbar mit dem spiralförmigen Strömungskanal 5.1 verbunden. Die Ausbuchtungen 41 sind beispielsweise zwischen Bodenwand 17 und Deckenwand 18 angeordnet und haben eine Zylinderform, wobei die Höhe des Zylinders beispielsweise gleich der Höhe der Spiralen 5 ist. Die Ausbuchtung 41 kann jedoch auch auf der der Deckenwand 18 zugewandten Seite höher sein als die Spirale 5. Durch die Ausbuchtungen 41 liegen die einzelnen Windungen, beispielsweise 50 und 51, beabstandet zueinander mit einem Zwischenraum 52.
Ein Teil der Gasströmung strömt tangential in die Ausbuchtung 41 ein und zirkuliert um eine Achse 45 der Ausbuchtung 41. Dabei werden Öltropfen an einer Innenwandung 47 der zylindrischen Ausbuchtung 41 abgeschieden. Diese laufen an der Innenwandung 47 der zylindrischen Ausbuchtung 41 hinab und werden auf der Bodenwand 17 der Ausbuchtung 41 durch die Rücklauföffnung 30 abgeführt. Mit dem Einströmen von Gas in die Ausbuchtung 41 findet auch gleichzeitig ein Ausströmen aus der Ausbuchtung 41 durch die Öffnung 44 in den Strömungskanal 5.1 der Spirale 5 zurück statt. Das aus der Ausbuchtung 41 in den Strömungskanal 5.1 der Spirale 5 zurückströmende Gas vermischt sich dabei mit der Gasströmung in dem Strömungskanal 5.1.
Die radiale Lage der Ausbuchtungen 41 kann in bezug auf den spiralförmigen Strömungskanal 5.1 zwischen zwei Extrempositionen vorgesehen sein, um eine gute Abscheidewirkung zu erzielen. Die eine Extremposition ist dadurch gekennzeichnet, daß die Achse 45 der Ausbuchtung 41 auf der Außenwandung 48 des Strömungskanals 5.1 angeordnet ist, die andere Extremposition ist erreicht, sobald die Ausbuchtung 41 die Außenwandung 48 des Strömungskanals 5.1 nur noch tangential berührt. Wenn die Ausbuchtung 41 die Außenwandung 48 des Strömungskanals 5.1 nur noch tangential berührt, ist jedoch keine Öffnung 44 zu dem Strömungskanal 5.1 mehr möglich.
Derartige Spiralen 5 aus Fig.7 können ebenso in dem Gehäuse 1 aus Fig.1 vorgesehen und beispielsweise in den Reihen 6 und 7 nebeneinander angeordnet sein.

## Patentansprüche

1. Vorrichtung zur Abscheidung von Flüssigkeit aus einem Gasstrom bestehend aus einem Gehäuse mit einem Eingangskanal, einem Gasauslaß und einem Flüssigkeitsauslaß und parallel geschalteten Abscheideelementen, **dadurch gekennzeichnet, daß** die parallel geschalteten Abscheideelemente einen durch Spiralen (5) oder Wendeln (37) gebildeten Strömungskanal (5.1,38,39) haben.

2. Vorrichtung nach Anspruch 1, **dadurch gekennzeichnet, daß** die Spiralen (5) mehrere zylindrische Ausbuchtungen (41) haben, die jeweils entlang dem spiralförmig ausgebildeten Strömungskanal (5.1,38,39) seitlich radial außen an dem Strömungskanal angeordnet sind und jeweils über eine Öffnung (44) mit dem Strömungskanal (5.1,38,39) verbunden sind.

3. Vorrichtung nach Anspruch 1, **dadurch gekennzeichnet, daß** der Strömungsquerschnitt (5.1,38,39) der Spiralen (5) oder Wendeln (37) in radialer Richtung schmal und senkrecht zur radialen Richtung hoch ausgebildet ist.

4. Vorrichtung nach Anspruch 1, **dadurch gekennzeichnet, daß** sich der Strömungsquerschnitt (5.1,38,39) der Spiralen (5) oder Wendeln (37) in Strömungsrichtung abschnittsweise aufweitet.

5. Vorrichtung nach Anspruch 1, **dadurch gekennzeichnet, daß** sich der Strömungsquerschnitt (5.1,38,39) der Spiralen (5) oder Wendeln (37) in Strömungsrichtung abschnittsweise verjüngt.

6. Vorrichtung nach Anspruch 1, **dadurch gekennzeichnet, daß** die Spiralen (5) oder Wendeln (37) in Reihen (6, 7) nebeneinander angeordnet sind.

7. Vorrichtung nach Anspruch 1, **dadurch gekennzeichnet, daß** die Spiralen (5) oder Wendeln (37) ineinanderliegend angeordnet sind.

8. Vorrichtung nach Anspruch 1, **dadurch gekennzeichnet, daß** die Spiralen (5) oder Wendeln (37) in einer Kombination ineinanderliegend und nebeneinander angeordnet sind.

9. Vorrichtung nach Anspruch 1, **dadurch gekennzeichnet, daß** in den Spiralen (5) oder Wendeln (37) Filterelemente, beispielsweise Vliese, Garne oder Drahtgestricke, angeordnet sind.

10. Vorrichtung nach Anspruch 1, **dadurch gekennzeichnet, daß** jede Spirale eine Bodenwand (17) und eine Deckenwand (18) aufweist, wobei die Bodenwand (17) wenigstens eine Rücklauföffnung (30) und die Deckenwand (18) wenigstens eine Gasaustrittsöffnung (33) aufweist.
